# EUROPEAN PATENT SPECIFICATION

(11) **EP 3 047 692 B1**
(45) Date of publication and mention of the grant of the patent: **26.01.2022**
(21) Application number: 14846321.9
(22) Date of filing: 12.09.2014
(51) Int. Cl.: H04W 64/00, G01S 5/02

(54) **DEVICES AND METHODS FOR SENDING OR RECEIVING ASSISTANCE DATA**
VORRICHTUNGEN UND VERFAHREN ZUM SENDEN ODER EMPFANGEN VON HILFSDATEN
DISPOSITIFS ET PROCÉDÉS POUR ENVOYER OU RECEVOIR DES DONNÉES D'ASSISTANCE

(30) Priority: 17.09.2013 US 201361879014 P
(43) Date of publication of application: 27.07.2016
(73) Proprietor: Apple Inc., Cupertino, CA 95014 (US)
(72) Inventor: ISA, Kenan N., 47051 Duisburg (DE); HORVAT, Michael, 81737 Munich (DE); CHOI, Hyung-Nam, 22117 Hamburg (DE)
(74) Representative: Lang, Johannes
(86) International application number: PCT/US2014/055513
(87) International publication number: WO 2015/041959

(56) References cited:
- US-A1- 2010 273 451
- US-A1- 2010 317 343
- US-A1- 2011 039 576
- US-A1- 2011 039 577
- US-A1- 2012 149 392
- US-A1- 2012 149 430
- US-A1- 2013 190 006
- BOHANUDIN, S ET AL.: 'Simulation model and location accuracy for observed ti me difference of arrival (OTDOA) positioning technique in Third Generation s ystem' 2010 IEEE STUDENT CONFEREECE ON RESEARCH AND DEVELOPMENT (SCORED 13 December 2010, pages 1 - 4, XP055292215 Retrieved from the Internet: <URL:http://ieeexplore.ieee.org/xpls/abs_al l.jsp?arnumber=5703972>

## Description

### Technical Field

Embodiments described herein generally relate to location servers and user equipment, more particularly, embodiments relate to location servers for sending assistance data relating to positioning reference signals and user equipment for receiving the assistance data.

### Background

Various positioning techniques have been developed for determining a location of a user equipment (UE). Among these techniques is the observed time difference of arrival (OTDOA) method. According to this method, a UE measures the time of arrival of the downlink (DL) signals from the base stations of several surrounding cells and reports these measurements (or quantities derived from these) back to the network. The location entity in the network then applies triangulation techniques based on the measurements in order to estimate the UE's position. The precision of the method may be improved by using further OTDOA measurements to other nearby base stations to fine tune the location estimate. The precision and reliability of OTDOA-based methods increase with increased availability of measurement data, especially when the UE can measure more than just 2 or 3 surrounding base stations. The LTE Positioning Protocol (LPP) in 3GPP TS 36.355 specifies an implementation of an OTDOA method.

US 2010/317343 refers to a method of inter-cell, or inter-sector, enhanced observed time difference (OTD) signal transmission coordination. A plurality of eNBs transmitting enhanced OTD measurement signals may do so jointly - e.g. occupying the same, or related but jointly or co-scheduled time-frequency regions. If the identical time-frequency region is used, a single "virtual" eNB for the purposes of OTD measurements may be reported by a UE.

According to a first aspect of the invention, there is provided a device for use in a mobile communication user equipment, as claimed in claim 1.

According to a second aspect of the invention, there is provided a location server for use in a communication system, as claimed in claim 9.

According to a third aspect of the invention, there is provided a method performed by a user equipment, as claimed in claim 12.

According to a fourth aspect of the invention, there is provided a method performed by a location server, as claimed in claim 13.

Further embodiments of the invention are included in the dependent claims.

### Brief Description of the Drawings

Figure 1 illustrates a system for performing OTDOA positioning.
Figure 2 illustrates limitations of the system described in 3GPP TS 36.355.
Figure 3 illustrates a location server.
Figure 4 illustrates effects of providing offset information.
Figure 5 illustrates an example of offset information.
Figure 6 illustrates a method of receiving assistance data performed by a user equipment according to some embodiments.
Figure 7 illustrates a method of sending assistance data performed by a location server according to some embodiments.
Figure 8 illustrates a system according to some embodiments.
Figure 9 illustrates an embodiment of a mobile device.

### Description of Embodiments

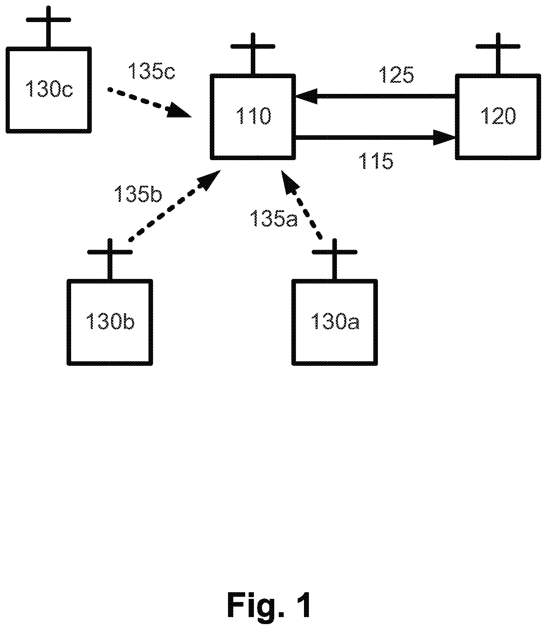

Figure 1 illustrates a system 100 for performing OTDOA positioning. The system includes a UE 110, which may be any suitable target device for OTDOA positioning, and a location server 120. In order to perform an OTDOA measurement, the location server 120 provides assistance data 125 to the UE 110.

The UE 110 measures the timing of receipt, by the UE, of positioning reference signals (PRSs) 135a-c from a plurality of references sources 130a-c. The positioning reference signal sources may be eNodeBs (eNBs) that have PRS configured, for example. The measurements by the UE may include Reference Signal Time Difference (RSTD) measurements.

The UE 110 reports the measured timings, or data derived from the timings, to the location server 120 in measurement data 115.

The location server 120 may use the received measurement data 115 to determine a location of the UE 110 using triangulation techniques and knowledge of the locations of the reference sources 130a-c.

Communication between the UE 110 and the location server 120 (e.g. assistance data 125 and measurements 115) may be performed using one or more LPP sessions.

The assistance data 125 provides the UE 110 with configuration parameters of the reference sources 130a-c.

3GPP TS 36.355 release 9 requires that the UE 110 receive the assistance data 125 though the serving cell (primary cell, Pcell). However, in 3GPP TS 36.355 release 10, it is possible for the UE 110 to receive OTDOA assistance data through any serving cell (primary cell or secondary cell, Scell), if the UE 110 supports carrier aggregation.

TS 36.355, section 6.5.1.1 includes a note that the location server should include in the assistance data at least one cell for which the System Frame Number (SFN) can be obtained by the target device, e.g. the serving cell, either as the assistance data reference cell or in the neighbor cell list. Otherwise the target device will be unable to perform the OTDOA measurement and the positioning operation will fail.

Typically, SFN is obtained by the UE 110 from Physical Broadcast Channel (PBCH) detection (i.e. the master information block (MIB) detection ), which is usually carried out only for the UE's serving cell(s). A UE 110 could be arranged to decode the PBCH to obtain SFN for a cell other than a serving cell for e.g. the assistance data reference cell.. However, this is complex and would require a further timing synchronization to this cell by the UE while processing throughput on the serving cell. Further, the minimum SINR for PRS is specified to be -13dB in 3GPP TS 36.133. In contrast, for PBCH the minimum SINR is specified to be -6.1dB in 3GPP TS 36.101. Since the actual serving cell is typically connected with the UE for actual data throughput due to having the highest SINR among the identified cells, it is questionable whether or not the other identified cells, which have a lower SINR than the serving cell, would have a strong enough signal for PBCH detection.

The present inventors have realized that, where the assistance data reference cell is not a serving cell, the reference sources 130a-c that are useable for OTDOA measurement may be more limited, and in some cases, it may be impossible to perform OTDOA measurement.

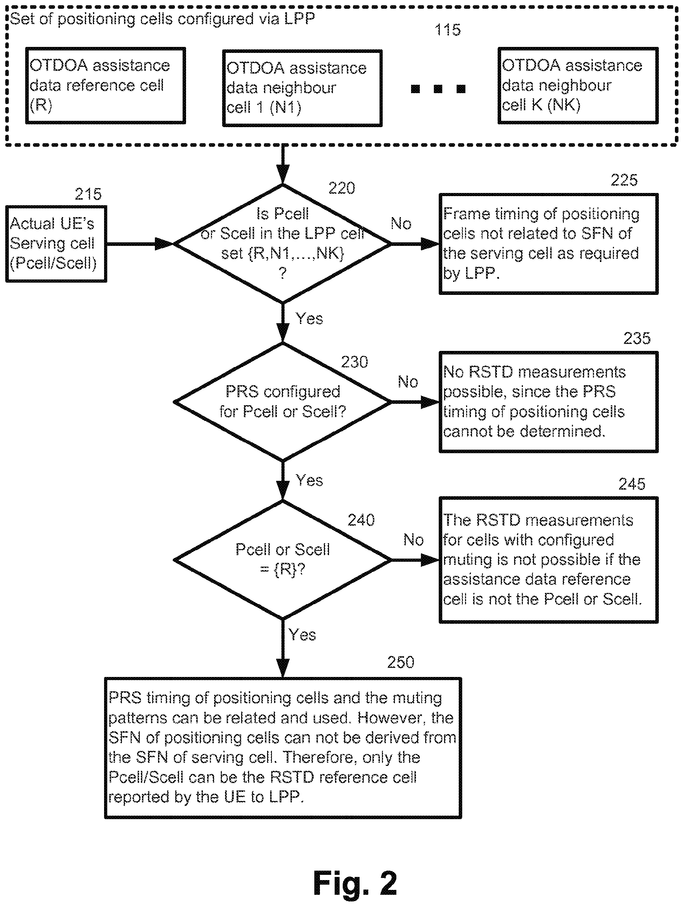

Figure 2 illustrates some limitations of the system as described in TS 36.355, release 10 (this also applies to rease 9, assuming a sigle serving cell = Pcell). The UE receives assistance data 115 that is providing information on an OTDOA assistance data reference cell, R, and on a plurality of OTDOA assistance data neighbor cells, N1,..., NK. According to LPP, the assistance data includes the information shown in Table 1. The neighbor cells correspond to reference sources 130a-c that may have PRS that are detectable by the UE.

| Assistance Data Reference Cell (R) | Assistance data neighbour Cell 1 (N1) | Assistance data neighbour Cell K (NK) |
|---|---|---|
| physCellId | physCellId | physCellId |
| cellGlobalId | cellGlobalId | cellGlobalId |
| earfcn | earfcn | earfcn |
| cpLength | cpLength | cpLength |
| prsInfo | prsInfo | prsInfo |
| antennaPortConfig | antennaPortConfig | antennaPortConfig |
| | slotNumberOffset | slotNumberOffset |
| | prs-SubframeOffset | prs-SubframeOffset |
| | expectedRSTD | expectedRSTD |
| | expectedRSTD-Uncertainty | expectedRSTD- Uncertainty |

The UE 110 is frame and time synchronized to the serving cell and so the UE 110 has information 215 for the serving cell, including for example, SFN, physCellId, cellGlobalId, earfcn, cpLength, antennaPortConfig.

Herein the term assistance data cells refers to cells in the group consisting of the assistance data reference cell and the assistance data neighbor cells.

Question 220 of Figure 2 asks if the serving cell is one of the assistance data cells. When the answer to question 220 is "No" OTDOA measurements are not possible (result 225). In this case, the frame timing of the positioning cells (i.e. assistance data neighbor cells) are not known, since they are not related to the SFN of the serving cell. This is contrary to the requirement of TS 36.355, 6.5.1.1, which states "[t]he location server should include at least one cell for which the SFN can be obtained by the target device, e.g. the serving cell, in the assistance data, either as the assistance data reference cell or in the neighbor cell list. Otherwise the target device will be unable to perform the OTDOA measurement and the positioning operation will fail."

Where the answer to question 220 is "yes", question 230 of Figure 2 asks if the serving cell has PRS configured. If the answer to this question is "no", RSTD measurements are not possible, as it is not possible for the UE to determine the PRS timing of the positioning cells (result 235).

Where the answer to questions 220 and 230 are "Yes", question 240 asks if the serving cell is the reference cell. If the answer to this question is "no", RSTD measurements may be performed, but only for cells with PRS muting not configured. RSTD measurements are not possible for positioning cells that have PRS muting configured (result 245).

If the answer is "yes" to each of questions 220, 230 and 240, RSTD measurements may be performed for positioning cells with or without PRS muting configured. However, when the UE reports the RSTD measurement data 115 to the location server 120, the serving cell must be used as the reference cell, which reduces flexibility and possible performance improvement (result 250).

The following provides more detail regarding results 235, 245 and 250.

In an arrangement where the serving cell does not transmit PRS, it is not possible to perform RSTD measurements (result 235). To enable the UE to detect the PRS from the assistance data neighbour cells, the assistance data according to TS 36.355 includes a parameter, prs-SubframeOffset, for each of the neighbor cells. This field specifies the offset between the first PRS subframe in the assistance data reference cell on the reference carrier frequency layer and the first PRS subframe in the closest subsequent PRS positioning occasion of this cell on the other carrier frequency layer. The value is given in number of full sub-frames. If the ARFCN is not the same as for the assistance data reference cell and the field is not present but PRS are available on this cell, the receiver shall consider the PRS subframe offset for this cell to be 0. This is, by definition, a timing difference between positioning reference symbols, and when positioning reference symbols are not transmitted there is no such offset. In this case (result 235), the UE cannot use prs-SubframeOffset to find the PRS timings for assistance data cells, since it relates to the case where PRS is not configured for the serving cell, and so prs-SubframeOffset is not defined between the serving cell and other cells in the assistance data. Accordingly, it is impossible for UE to make RSTD measurements using PRS.

In relation to result 245 of Figure 2, for PRS muting of assistance data cells TS 36.355 provides the muting patterns of respective assistance data cells to the UE within the assistance data. The PRS muting configuration is defined by a periodic PRS muting sequence with periodicity T_{REP} where T_{REP}, counted in the number of PRS positioning occasions, can be 2, 4, 8, or 16, which is also the length of the selected bit string that represents this PRS muting sequence. If a bit in the PRS muting sequence is set to "0", then the PRS is muted in the corresponding PRS positioning occasion. The first bit of the PRS muting sequence corresponds to the first PRS positioning occasion that starts after the beginning of the assistance data reference cell SFN=0. However, where the UE does not know the current SFN of the assistance data reference cell, such as when the assistance data reference cell is not the serving cell, the muting pattern timing is unknown for all assistance data neighbor cells. TS 36.355 states that when the SFN of the assistance data reference cell is not known to the UE and prs-MutingInfo is provided for a cell in the OTDOA-NeighbourCellInfoList Information Element (IE), the UE may assume no PRS is transmitted by that cell. Accordingly, it is not possible to use neighbor cells with muting configured for RSTD measurements when the assistance data reference cell is different from the serving cell.

In some cases, it may not be possible to ensure that the assistance data reference cell is the serving cell. For example, when a handover occurs just after assistance data has been sent to a UE. Due to the above stated reasons, RSTD measurement performance degradation may result if the UE does not have information about the assistance data reference cell SFN.

In another example, RSTD measurements may not be possible is when all positioning cells with PRS configuration are on the same frequency, f2, and the actual serving cell is on frequency f1. In this case, the link between the actual serving cell SFN and the frame timings of the positioning cells is not available to the UE. This case corresponds to the UE performing inter-frequency RSTD measurements only. This is specified in 3GPP TS 36.133, Table 8.1.2.6.1-1. In this table, column 1 corresponds to f2 only and column 2 corresponds to f1 and f2. However, it is not possible to apply column 1 (f2 only) inter-frequency only RSTD measurements. The is because the UE is obliged to report the systemFrameNumber field in the OTDOA-SignalMeasurementInformation IE specified in 3GPP TS 36.355, section 6.5.1.5, and it is therefore not possible to have an RSTD reference cell different from the serving cell, since the UE knows SFN only for the serving cell. This can be a performance limitation for the RSTD measurements on frequencies different from the frequency of the serving cell.

Another example scenario is the case of a UE 110 connected to a pico or femto cell as the serving cell, where the UE receives OTDOA assistance data only containing macro cells (e.g. only these cells transmit the PRSs).

The cause of these limitations is described in more detail in the following.

3GPP 36.211 Table 6.10.4.3-1 defines PRS subframe configuration according to the following table

| PRS configuration Index I_{PRS} | PRS periodicity T_{PRS} (subframes) | PRS subframe offset Δ_{PRS} (subframes) |
|---|---|---|
| 0-159 | 160 | I_{PRS} |
| 160-479 | 320 | I_{PRS} - 160 |
| 480-1119 | 640 | I_{PRS} - 480 |
| 1120-2399 | 1280 | I_{PRS} - 1120 |

Here, T_{PRS} is the PRS transmission period of the corresponding cell (prsInfo.prs-ConfigurationIndex.Tprs). Δ_{PRS} specifies when PRS is transmitted by the corresponding cell (prsInfo.prs-ConfigurationIndex.Dprs). If T_{PRS} and Δ_{PRS} are known, the LTE frame number, n_{f}, and the LTE subframe number, n_{sf}, corresponding to the first subframe of the PRS can be calculated using (given in 3GPP 36.211 Section 6.10.4.3): (10 × *n_{f}* + [*^{nₛ}*/₂] - Δ*_{PRS}*)mod*T_{PRS}* = 0. Where nₛ is the slot number and the subframe number, n_{sf}=Int(nₛ/2).

The LTE frame number for a given cell, n_{f}, can take values from 0 to 1023, and corresponds to the SFN of that cell, and n_{sf} is the LTE subframe number within the corresponding LTE frame, with each frame including 10 subframes numbered 0 to 9.

For example, if T_{PRS}=160 and Δ_{PRS}=5, the corresponding cell transmits PRS within the subframes given in the following table:

| | | | | | | | | | |
|---|---|---|---|---|---|---|---|---|---|
| n_{f} | 0 | 16 | 32 | 48 | 64 | ··· | 1008 | 0 | ··· |
| n_{sf} | 5 | 5 | 5 | 5 | 5 | ··· | 5 | 5 | ··· |

Where n_{f} takes consecutive values between 0 and 1023 before returning to 0, and for each value of n_{f}, nₛ takes values between 0 and 9, consecutively.

| | | | | | | | | | | | | | | | | | | | | | |
|---|---|---|---|---|---|---|---|---|---|---|---|---|---|---|---|---|---|---|---|---|---|
| n _{f} | 0 | 0 | 0 | ··· | 0 | 1 | 1 | 1 | ··· | 1 | 2 | 2 | ··· | 102 3 | 102 3 | 102 3 | ··· | 102 3 | 0 | 0 | ··· |
| n ₛ | 0 | 1 | 2 | ··· | 9 | 0 | 1 | 2 | ··· | 9 | 0 | 1 | ··· | 0 | 1 | 2 | ··· | 9 | 0 | 1 | ··· |

If T_{PRS} and Δ_{PRS} are provided, the UE can identify PRS timing provided n_{f} and nₛ are known for the particular cell at a particular moment. However, in an asynchronous network, each cell has independent n_{f} and nₛ values at any given moment. Accordingly, where assistance data provides only T_{PRS} and Δ_{PRS}, the UE may only make full use of this data if it also knows the timings of that cell (i.e. its n_{f} and nₛ values).

This issue of not being able to identify the PRS timings of cells is not present for synchronous networks, , but since the synchronous network condition is not signaled within the assistance data, the UE must assume that the network is asynchronous.

In order to address this issue, TS 36.355 includes in the assistance data prs-SubframeOffset, for each neighbour cell. This is the offset (the number of whole subframes between the first PRS subframe of the assistance data reference cell and the next closest subsequent PRS subframe of the corresponding neighbour cell. However, where the frame timing of the reference cell is not known, prs-SubframeOffset does not provide sufficient information to determine the frame timings for other neighbour cells.

Embodiments of the invention may eliminate or ameliorate one or more of the above problems.

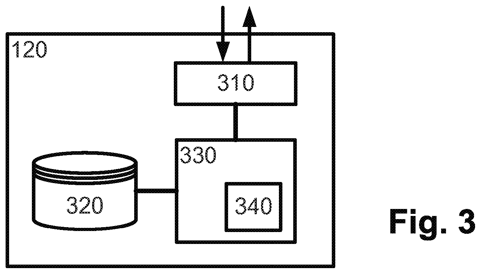

Figure 3 shows an example of a location server 120 according to some embodiments. The location server 120 includes a communication section 310 for communicating with a network, a data base 320 for storing information on cells, including the reference cell and neighbor cells, and assistance data preparation section 330. The assistance data preparation section obtains information from the database 320 and prepares assistance data for sending to the UE via the communication section 310 and the network. The assistance data preparation section 330 includes frame number offset determining section 340. The frame number offset determining section 340 determines respective frame offsets between the assistance data reference cell and each of the neighbouring cells of the assistance data, and includes the result of this determination in the assistance data to be transmitted to the UE 110.

According to some embodiments, the assistance data may include offset information indicating the result of the determination by the frame number offset determining section 340, e.g. in the form of an OTDOA parameter. According to some embodiments, the OTDOA parameter may be defined as:
frameNumberOffset: This parameter specifies the SFN number offset at the transmitter between this cell and the assistance data reference cell.

The offset information may be included in the OTDOA-NeighbourCellInfoList information element. For example, the frameNumberOffset parameter may be provided in addition to the parameters of the information element OTDOA-NeighbourCellInfoElement, or an existing parameter in OTDOA-NeighbourCellInfoElement information element may be redefined. For example, the parameter prs-SubframeOffset may be replaced with frameNumberOffset, or a corresponding parameter. prs-SubframeOffset is defined in 3GPP TS 36.355, section 6.5.1.2, IE OTDOA-NeighbourCellInfoList. This parameter specifies the offset between the first PRS subframe in the assistance data reference cell on the reference carrier frequency layer and the first PRS subframe in the closest subsequent PRS positioning occasion of this cell on the other carrier frequency layer.

In some embodiments, the offset information may be provided in a separate information element from the OTDOA-NeighbourCellInfoList IE.

In some embodiments, the offset information may be provided separately from the assistance data.

In some embodiments, the database 320 may be external to the location server 120, and the location server 120 may receive information on neighboring cells via the communication section 310, for example.

In some examples, the location server 120 may be further arranged to receive RSTD measurements from the UE 110 via the communication section 310, and may further include a location calculating section (not shown) for determining an approximate position of the UE based on the received RSTD measurements.

The various sections of the location server 120 may be implemented in hardware, software and/or firmware. The sections of the location server 120 may share some or all of their hardware. The location server 120 may include one or more processors, storage media, etc. to implement the various sections described above.

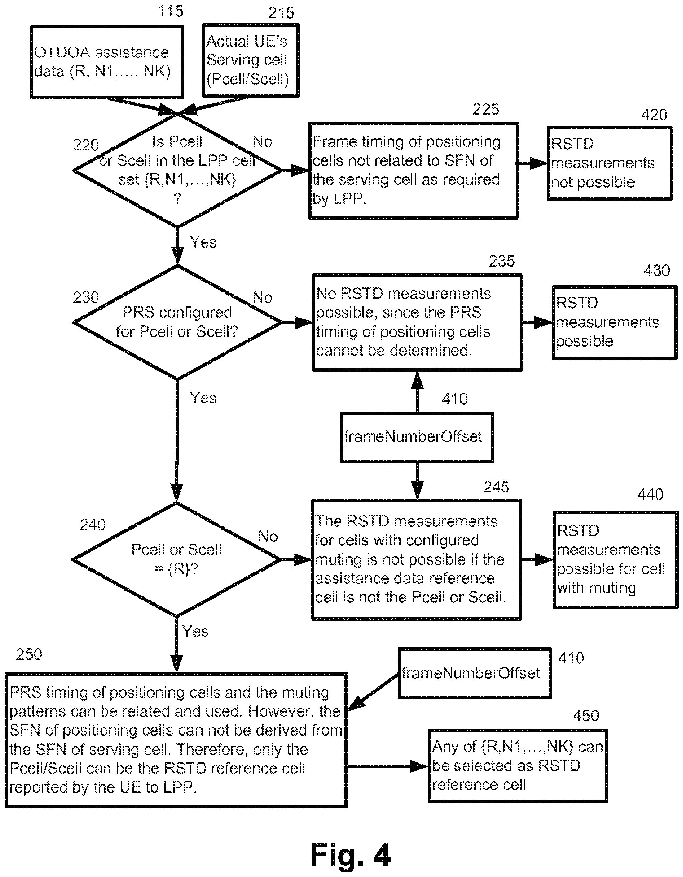

Figure 4 shows the questions and results of Figure 2, but indicates how the results may differ when offset information is provided to the UE. In particular, the results 235, 245 and 250 may change when offset information 410 is provided.

Where PRS is not configured for the serving cell (question 230), the offset information 410 makes it possible to perform PRS-based RSTD measurements 430. With the offset information, the SFN of the assistance data reference cells can be determined by the UE, prs-ConfigurationIndex can then be used for the neighbor cells to identify the positioning occasions for the neighbour cells. Therefore, the offset information allows PRS-based RSTD measurements even when the serving cell (PCell or SCell) does not have PRS configured.

When the serving cell is not the assistance data reference cell (question 240), the offset information 410 makes it possible to perform RSTD measurements for neighbour cells with PRS muting enabled, since the offset information enables the UE 110 to determine the SFN for the assistance data reference cell using the serving cell SFN, and so the UE can determine the starting time of the muting pattern for each assistance data cell.

When the assistance data reference cell is the serving cell (question 240), the offset information allows the UE to calculate the frame timing for any of the neighbour cells for which offset information is provided, and so any of these neighbour cells may be used as the RSTD reference cell when the UE 110 reports the RSTD measurements to the location sever 120. This allows the UE to freely select the RSTD reference cell, such that the RSTD reference cell may be selected from a frequency that has the most reliable RSTD results. In contrast, forcing the RSTD reference cell to be the serving cell, for example, can degrade the RSTD measurement results. Instead, for example, if only measurements on frequency f2 have been performed (with the serving cell on frequency fl), selecting an inter-frequency cell as RSTD reference cell will provide better RSTD measurement performance.

The offset information enables the UE 110 to determine the timing relation between all of the assistance data cells, and the UE 110 can determine PRS timings for assistance data cells from the PRS configuration information provided within the assistance data. The form of the offset information is not particularly limited.

As described above, the offset information allows a frame relation to be calculated between the OTDOA positioning assistance data reference cell and the serving cell, without requiring further PBCH (MIB) detection. In addition, the offset information allows the removal of ambiguity in the frame relation among the positioning cells.

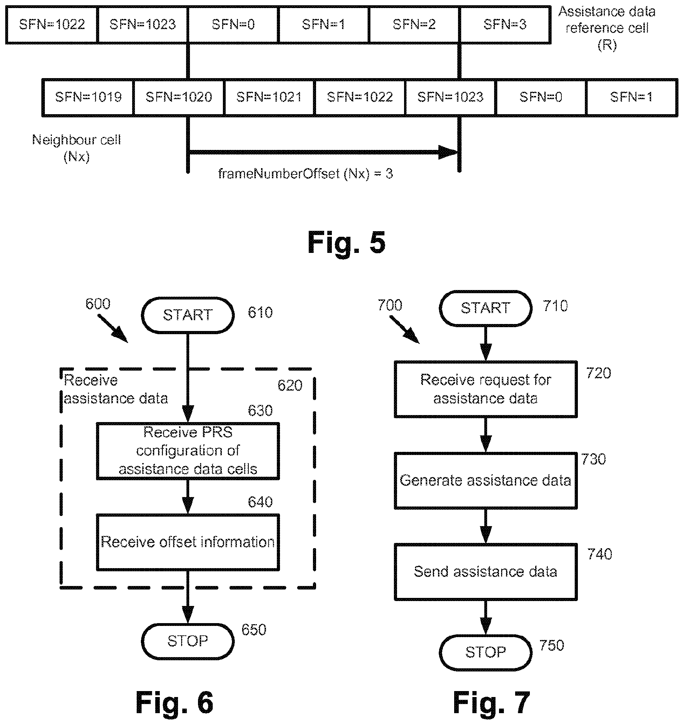

Figure 5 shows an example of a frame number offset in accordance with some embodiments. In the example of Figure 5, the frameNumberOffset is defined as the (integer) number of frames of the assistance data reference cell between the start of a particular frame (e.g. SFN=0) of the assistance data reference cell and a start of the corresponding frame in a particular neighbour cell.

According to TS 36.355, the assistance data includes a slotNumberOffset field. This is intended for CRS-based RSTD measurements, and is not required for PRS-based measurements. However, slotNumberOffset may be used in conjunction with the frameNumberOffset field, described above, to calculate n_{f} and n_{sf} values for the corresponding neighbour cell, using the values of n_{f} and n_{fs} of the serving cell. The field frameNumberOffset gives the difference between n_{f} of the two cells. The field slotNumberOffset is the difference between nₛ of the two cells, and the subframe number can be determined from the relation n_{sf}=Int(nₛ/2).

According to some embodiments, a UE 110 is arranged to receive assistance data from a location server 120. The assistance data may include a neighbour cell list that describes timings, relative to an assistance data reference cell, of positioning reference signals (PRSs) of a plurality of neighbour cells. The assistance data may also include information on the assistance data reference cell, such as timing information. The assistance data reference cell and neighbour cells are collectively referred to herein as assistance data cells. The information on the assistance data reference cell and the neighbour information is referred to collectively herein as positioning assistance data. The assistance data may also include offset information describing respective frame offsets between the assistance data reference cell and each of the neighbour cells. In some embodiments the offset information may be included in the neighbour cell list.

The assistance data cells may include a serving cell of the UE. The serving cell may be the assistance data reference cell, or the serving cell may be one of the assistance data neighbour cells.

The UE 110 may be arranged to determine a time window for measuring the PRS receive timing relative to serving cell timing for an assistance data cell other than the serving cell based on the assistance data and/including the offset information.

The UE 110 may be arranged to perform RSTD measurements based on the assistance data and/including the offset information.

As described above, the UE 110 may be able to determine the time window for measuring the PRS of the neighbour cell even when the serving cell of the UE 110 is different from the assistance data reference cell and the neighbour cell has PRS muting enabled.

As described above, UE 110 may be able to determine the time window for measuring the PRS of the neighbour cell even when the serving cell (or any of the serving cells, when there are multiple serving cells) is not configured to provide PRS.

As described above, the UE 110 may be able to determine the time window for measuring the PRS of the assistance data cell even when the serving cell belongs to a first carrier frequency and all other assistance data cells including the reference cell belong to a second carrier frequency.

The following provides some examples of embodiments of the invention applied to particular scenarios.

In the first example, the assistance data reference cell is not the serving cell, and a neighbour cell has muting configured.

| Assistance Data Reference Cell (adrc) | | | |
|---|---|---|---|
| earfcnRef=1 | T_{PRS}=320 | Δ_{PRS}=0 | mutingPattern=11 |

| Serving cell (sc) and neighbour cell 1 (nc1) | | | |
|---|---|---|---|
| Earfcn=1 | T_{PRS}=320 | mutingPattern=11 | prs-SubframeOffset=0 |
| | Δ_{PRS}=0 | slotNumberOffset=0 | frameNumberOffset=0 |

| neighbour cell 2 (nc2) | | | |
|---|---|---|---|
| Earfcn=1 | T_{PRS}=320 | mutingPattern=0100 | prs-SubframeOffset=0 |
| | Δ_{PRS}=0 | slotNumberOffset=0 | frameNumberOffset=0 |

In this example, if the frameNumberOffset field is not provided, SFN of the assistance data reference cell is not known at the UE, and so it is not possible to find the starting position for neighbour cell 2, which has mutingPattern=0100. According to TS 36.355, when the SFN of the assistance data reference cell is not known to the UE and prs-MutingInfo is provided for a cell in the OTDOA-NeighbourCellInfoList IE, the UE may assume no PRS is transmitted by that cell. Thus, the UE cannot perform PRS measurements for neighbour cell 2.

In contrast, if frameNumberOffset is provided in the assistance data, the UE can determine n_{f}(adrc) and n_{sf}(adrc) from n_{f}(sc), n_{sf}(sc), frameNumberOffset(sc) and slotNumberOffset(sc), where adrc and sc indicates that the corresponding parameter belongs to the assistance data reference cell and serving cell, respectively.

With frameNumberOffset provided for the neighbor cell 1 (serving cell), the UE is able to calculate the frame number and subframe number of the assistance data reference cell, then the starting position of the mutingPattern of neighbour cell 2 becomes known, and the UE can perform RSTD measurements for neighbour cell 2.

In the second example, the serving cell is not the assistance data reference cell, and the serving cell does not transmit PRS.

| Assistance Data Reference Cell (adrc) | | | |
|---|---|---|---|
| earfcnRef=1 | T_{PRS}=320 | Δ_{PRS}=0 | mutingPattern=11 |

| Serving cell (sc) and neighbour cell 1 (nc1) | | | |
|---|---|---|---|
| Earfcn=1 | T_{PRS}=Undefined | mutingPattern=Undefined | prs-SubframeOffset=0 |
| | Δ_{PRS}=Undefined | slotNumberOffset=0 | frameNumberOffset=0 |

| neighbour cell 2 (nc2) | | | |
|---|---|---|---|
| Earfcn=1 | T_{PRS}=320 | mutingPattern=0100 | prs-SubframeOffset=0 |
| | Δ_{PRS}=0 | slotNumberOffset=0 | frameNumberOffset=0 |

In this example, T_{PRS} and Δ_{PRS} are not configured for the serving cell, as the serving cell is not transmitting PRS. Accordingly, in the absence of frameNumberOffset, the UE is not able to determine PRS for any of the assistance data cells; assistance data reference cell and neighbour cell 2, in this example. However, if frameNumberOffset is provided, the UE can calculate n_{f}(adrc) and n_{sf}(adrc) from n_{f}(sc), n_{sf}(sc), frameNumberOffset(nc1) and slotNumberOffset(nc1) where nc1 indicates that the corresponding parameter belongs to the assistance data neighbor cell 1.

From these values and T_{PRS}(adrc) and Δ_{PRS} (adrc), all PRS timings for assistance data reference cells can be determined by the UE 110. The PRS timing of neighbour cell 2 can be determined based on the PRS timing of the assistance data reference cell. Thus, even though the serving cell does not transmit PRS, the UE 110 is able to perform RSTD measurements.

Figure 6 illustrates a method 600 performed by a UE 110 according to some embodiments. The method 600 starts at 610. At 620, OTDOA assistance data is received by the UE 110. Receiving OTDOA assistance data includes (i) receiving 630 data indicative of timings of PRSs for a plurality of neighbour cells, and (ii) receiving 640 offset information. The offset information indicative of respective LTE frame offsets between the assistance data reference cell and the plurality of neighbour cells. The method terminates at 650, although other actions may be performed as part of the method, or a subsequent method may begin after 650.

In some embodiments, the method may include additional steps, such as determining a time window for measuring a PRS receive timing of an assistance data cell based on the data indicative of timings of PRSs and the offset information. The method may also include performing RSTD measurements and sending a report of the RSTD measurements, where the RSTD measurements are given relative to an RSTD reference cell. In some embodiments, the RSTD reference cell may be different from a serving cell of the UE.

Figure 7 illustrates a method 700 performed by a location server 120 according to some embodiments. The method 700 begins at 710. At 720 the location server 120 receives a request for assistance data. The request may originate from a UE, and may arrive at the location server via a communication network, which may include wired and/or wireless components. In response to the request 720, the location server generates 730 assistance data. The assistance data includes OTDOA parameters describing LTE frame relations between a plurality of neighbour cells and an assistance data reference cell, and offset information describing LTE frame offsets between the assistance data reference cell and the plurality of neighbour cells. At 740 the location server sends the assistance data in response to the request 720. The assistance data may be sent to the UE via the communication system. The method is shown terminating at 750, although other operations may be performed in addition to those shown, or another method may begin when the method 700 terminates.

In some embodiments, the method 700 may also include selecting the assistance data reference cell, where the assistance data reference cell is selected to be different from a serving cell of the UE.

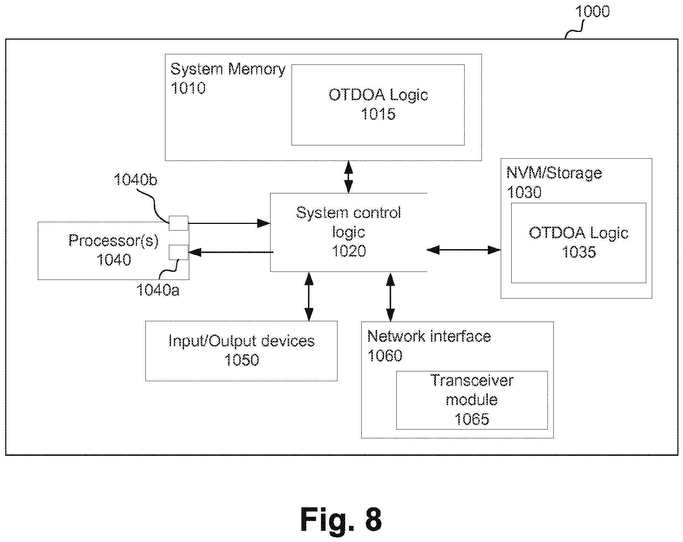

The UE 110 and location server 120 described herein may be implemented using any suitable hardware and/or software. Figure 8 illustrates an example system 1000 according to some embodiments. System 1000 includes one or more processor(s) 1040, system control logic 1020 coupled with at least one of the processor(s) 1040, system memory 1010 coupled with system control logic 1020, non-volatile memory (NVM)/storage 1030 coupled with system control logic 1020, and a network interface 1060 coupled with system control logic 1020. The system control logic 1020 may also be coupled to Input/Output devices 1050.

Processor(s) 1040 may include one or more single-core or multi-core processors. Processor(s) 1040 may include any combination of general-purpose processors and dedicated processors (e.g., graphics processors, application processors, baseband processors, etc.). Processors 1040 may be operable to carry out the above described methods, using suitable instructions or programs (i.e. operate via use of processor, or other logic, instructions). The instructions may be stored in system memory 1010, as system memory portion (OTDOA Logic) 1015, or additionally or alternatively may be stored in (NVM)/storage 1030, as NVM instruction portion (OTDOA Logic) 1035.

OTDOA logic 1015 and/or 1035 may include a logic to cause a processor 1040 to receive offset information and/or extract offset information from PRS assistance data, as described above. OTDOA logic 1015 and/or 1035 may also include logic to perform other OTDOA actions, as described above.

OTDOA logic 1015 and/or 1035 may include logic to cause a processor 1040 to determine offset information, as described above. OTDOA logic 1015 and/or 1035 may also include logic to perform other OTDOA actions, as described above, such as determining neighbour data, preparing assistance data based on offset information and neighbour data and sending the assistance data to a UE.

Processors(s) 1040 may be configured to execute the embodiments of Figures 1 to 7 in accordance with various embodiments.

System control logic 1020 for one embodiment may include any suitable interface controllers to provide for any suitable interface to at least one of the processor(s) 1040 and/or to any suitable device or component in communication with system control logic 1020.

System control logic 1020 for one embodiment may include one or more memory controller(s) to provide an interface to system memory 1010. System memory 1010 may be used to load and store data and/or instructions, for example, for system 1000. System memory 1010 for one embodiment may include any suitable volatile memory, such as suitable dynamic random access memory (DRAM), for example.

NVM/storage 1030 may include one or more tangible, non-transitory computerreadable media used to store data and/or instructions, for example. NVM/storage 1030 may include any suitable non-volatile memory, such as flash memory, for example, and/or may include any suitable non-volatile storage device(s), such as one or more hard disk drive(s) (HDD(s)), one or more compact disk (CD) drive(s), and/or one or more digital versatile disk (DVD) drive(s), for example.

The NVM/storage 1030 may include a storage resource physically part of a device on which the system 1000 is installed or it may be accessible by, but not necessarily a part of, the device. For example, the NVM/storage 1030 may be accessed over a network via the network interface 1060.

System memory 1010 and NVM/storage 1030 may respectively include, in particular, temporal and persistent copies of, for example, the OTDOA logic 1015 and 1035, respectively. OTDOA logic 1015 and 1035 may include instructions that when executed by at least one of the processor(s) 1040 result in the system 1000 implementing a one or more of methods 600 and/or 700, or the method(s) of any other embodiment, as described herein. In some embodiments, instructions 1015 and 1035, or hardware, firmware, and/or software components thereof, may additionally/alternatively be located in the system control logic 1020, the network interface 1060, and/or the processor(s) 1040.

Network interface 1060 may have a transceiver module 1065 to provide a radio interface for system 1000 to communicate over one or more network(s) (e.g. wireless communication network) and/or with any other suitable device. The transceiver 1065 may perform the various communicating, transmitting and receiving described in the various embodiments, and may include a transmitter section and a receiver section. In various embodiments, the transceiver 1065 may be integrated with other components of system 1000. For example, the transceiver 1065 may include a processor of the processor(s) 1040, memory of the system memory 1010, and NVM/Storage of NVM/Storage 1030. Network interface 1060 may include any suitable hardware and/or firmware. Network interface 1060 may be operatively coupled to a plurality of antennas to provide a multiple input, multiple output radio interface. Network interface 1060 for one embodiment may include, for example, a network adapter, a wireless network adapter, a telephone modem, and/or a wireless modem. For example, where system 1000 is a location server, network interface 1060 may include an Ethernet interface, an S1-MME interface and/or an S1-U interface.

For one embodiment, at least one of the processor(s) 1040 may be packaged together with logic for one or more controller(s) of system control logic 1020. For one embodiment, at least one of the processor(s) 1040 may be packaged together with logic for one or more controllers of system control logic 1020 to form a System in Package (SiP). For one embodiment, at least one of the processor(s) 1040 may be integrated on the same die with logic for one or more controller(s) of system control logic 1020. For one embodiment, at least one of the processor(s) 1040 may be integrated on the same die with logic for one or more controller(s) of system control logic 1020 to form a System on Chip (SoC). Each of the processors 1040 may include an input 1040a for receiving data and an output 1040b for outputting data.

In various embodiments, the I/O devices 1050 may include user interfaces designed to enable user interaction with the system 1000, peripheral component interfaces designed to enable peripheral component interaction with the system 1000, and/or sensors designed to determine environmental conditions and/or location information related to the system 1000.

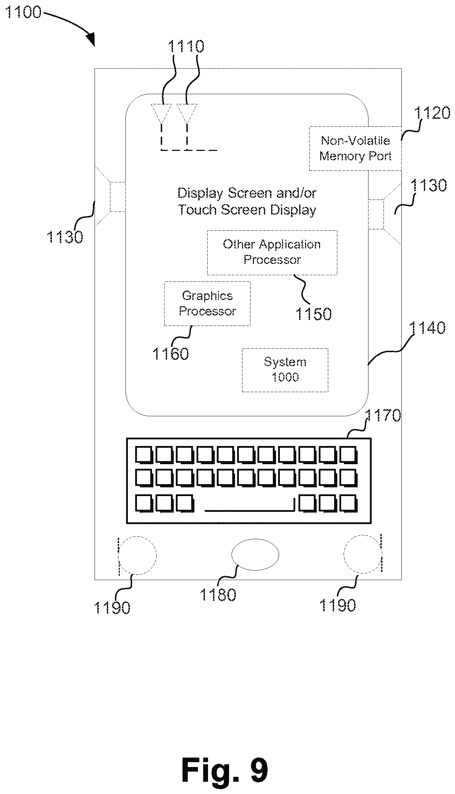

Figure 9 shows an embodiment in which the system 1000 implements a UE 110 in the specific form of a mobile device 1100.

In various embodiments, the user interfaces could include, but are not limited to, a display 1140 (e.g., a liquid crystal display, a touch screen display, etc.), a speaker 1130, a microphone 1190, one or more cameras 1180 (e.g., a still camera and/or a video camera), a flashlight (e.g., a light emitting diode flash), and a keyboard 1170.

In various embodiments, the peripheral component interfaces may include, but are not limited to, a non-volatile memory port, an audio jack, and a power supply interface.

In various embodiments, the sensors may include, but are not limited to, a gyro sensor, an accelerometer, a proximity sensor, an ambient light sensor, and a positioning unit. The positioning unit may also be part of, or interact with, the network interface 1060 to communicate with components of a positioning network, e.g., a global positioning system (GPS) satellite.

In various embodiments, the system 1100 may be a mobile computing device such as, but not limited to, a laptop computing device, a tablet computing device, a netbook, a mobile phone, etc. In various embodiments, system 1100 may have more or less components, and/or different architectures.

As used herein, "processing circuitry to/configured to/arranged to" perform a function comprises at least one of "hardware configured to", "software configured to" and a "combination of hardware and software configured to" perform that function.

In embodiments, the implemented wireless network may be a 3rd Generation Partnership Project's long term evolution (LTE) advanced wireless communication standard, which may include, but is not limited to releases 8, 9, 10, 11 and 12, or later, of the 3GPP's LTE-A standards.

Although embodiments of the invention are not limited in this regard, the terms "plurality" and "a plurality" as used herein may include, for example, "multiple" or "two or more." The terms "plurality" or "a plurality" may be used herein to describe two or more components, devices, elements, units, parameters, and the like. For example, "a plurality of devices" may include two or more devices.

Where operations are described as multiple discrete operations, this is for the purpose of explaining the illustrative embodiments; however, the order of description should not be construed as to imply that these operations are necessarily order dependent. In particular, these operations need not be performed in the order of presentation.

The terms "comprising," "having," and "including" are synonymous, unless the context dictates otherwise. The phrase "A/B" means "A or B". The phrase "A and/or B" means "(A), (B), or (A and B)". The phrase "at least one of A, B and C" means "(A), (B), (C), (A and B), (A and C), (B and C) or (A, B and C)". The phrase "(A) B" means "(B) or (A B)", that is, A is optional.

Unless contrary to physical possibility, the inventors envision the methods described herein: (i) may be performed in any sequence and/or in any combination; and (ii) the components of respective embodiments may be combined in any manner.

Although there have been described example embodiments of this novel invention, many variations and modifications are possible without departing from the scope of the invention. Accordingly the inventive embodiments are not limited by the specific disclosure above, but rather only by the scope of the appended claims.

## Claims

1. A device for use in a mobile communication user equipment, UE, (110) the device comprising processing circuitry arranged to:
receive (630) cell data pertaining to a plurality of assistance data cells, and
receive (640) offset information, wherein
the plurality of assistance data cells includes an assistance data reference cell and a plurality of neighbour cells (130a-c),
the cell data includes:
(i) information to describe timings of positioning reference signals, PRSs, of the assistance data reference cell, and
(ii) neighbour information, the neighbour information to describe timings, relative to the assistance data reference cell, of positioning reference signals, PRSs, of the plurality of neighbour cells, and wherein
the offset information describes respective LTE frame offsets between the assistance data reference cell and each of the neighbour cells.

2. The device of claim 1, wherein a serving cell of the UE is the assistance data reference cell or one of the plurality of neighbour cells.

3. The device of claim 2, wherein the processing circuitry is further arranged to determine a time window relative to a serving cell timing for measuring a PRS receive timing of an assistance data cell other than the serving cell based on the cell data and the offset information.

4. The device of claim 3, wherein:
the serving cell is different from the assistance data reference cell; and
the neighbour cell has PRS muting enabled.

5. The device of claim 1, wherein:
when the UE has one or more serving cells, and none of the serving cells is configured to transmit positioning reference signals, the processing circuitry is further arranged to determine a time window for measuring a PRS receive timing of an assistance data cell that is not one of the serving cells based on the neighbour information and the offset information.

6. The device of claim 2, wherein when the serving cell belongs to a first carrier frequency, and the reference cell and at least one of the other assistance data cells belong to a second carrier frequency different from the first carrier frequency, the processing circuitry is further arranged to perform inter-frequency RSTD measurements on the second carrier frequency based on the cell data and the offset information.

7. The device of any preceding claim, wherein the processing circuitry is further arranged to:
perform RSTD measurements using received PRSs of at least some of the assistance data cells; and
generate a report based on the RSTD measurements, the report indicating the RSTD measurements relative to an RSTD reference cell, wherein
the RSTD reference cell is different from a serving cell of the UE.

8. A user equipment (110, 1100) comprising:
the device of any preceding claim; and
further comprising one or more of: a screen (1140), a speaker (1130), a touchscreen, a keyboard (1170), an antenna array including a plurality of antennas (1100), a graphics processor (1160), an application processor (1150).

9. A location server (120) for use in a communication system, the device arranged to provide positioning assistance data (125) to a user equipment (110), UE, the device comprising processing circuitry arranged to:
determine information describing an assistance data reference cell;
determine cell data, the cell data to describe relative transmit timings of positioning reference signals between a plurality of neighbour cells (130a-c);
determine offset information describing respective LTE frame time offsets between the assistance data reference cell and each of the neighbour cells; and
send (740) to the UE data including the information describing the assistance data reference cell, the cell data, and the offset information;
wherein the assistance data includes at least the information describing the assistance data reference cell and the cell data.

10. The location server of claim 9, wherein the assistance data reference cell is not a serving cell of the UE.

11. The location server of claim 9, wherein:
the plurality of neighbour cells and the assistance data reference cell are assistance data cells;
a serving cell of the UE is one of the assistance data cells, and the serving cell of the UE belongs to a first carrier frequency;
at least one of the assistance data cells other than the serving cell belong to a second carrier frequency.

12. A method (600) performed by a user equipment, UE, (110) the method comprising:
receiving (610) Observed Time of Difference Of Arrival, OTDOA, assistance data, the OTDOA assistance data including data indicative of timings of positioning reference signals, PRSs, for a plurality of neighbour cells, the timings indicated relative to a timing of an assistance data reference cell, wherein
receiving OTDOA assistance data includes receiving (640) offset information, the offset information indicative of respective LTE frame offsets between the assistance data reference cell and the plurality of neighbour cells.

13. A method (700) performed by a location server (120), the method comprising:
receiving (720) from a user equipment, UE, (110) a request for Observed Time of Difference Of Arrival, OTDOA, assistance data;
generating (730) the OTDOA assistance data (125); and
sending (740) the generated OTDOA assistance data to the UE, wherein
the OTDOA assistance data includes offset information describing LTE frame offsets between the assistance data reference cell and the plurality of neighbour cells.

14. A computer program that when executed by a computer causes the computer system to perform the method of any one of claims 9 to 13 or to perform as the device of any one of claims 1 to 8.

15. A non-transitory storage machine-readable storage medium having stored thereon instructions that, when executed by a computer, cause the computer to perform the method of any one of claims 9 to 13, or operate as the apparatus of any one of claims 1 to 8.

## Patentansprüche

1. Vorrichtung zur Verwendung in einem Mobilkommunikations-Benutzergerät, UE, (110), die Vorrichtung umfassend Verarbeitungsschaltung, die eingerichtet ist zum:
Empfangen (630) von Zelldaten betreffend eine Vielzahl von Unterstützungs-Daten-Zellen, und
Empfangen (640) von Versatzinformation, wobei
die Vielzahl von Unterstützungs-Daten-Zellen eine Unterstützungs-Daten-Referenz-Zelle und eine Vielzahl von Nachbarzellen (130a-c) beinhaltet, wobei die Zelldaten beinhalten:
(i) Information zum Beschreiben von Timings von Positionierungs-Referenzsignalen, PRSs, der Unterstützungs-Daten-Referenz-Zelle, und
(ii) Nachbarinformation, wobei die Nachbarinformation dazu dient, Timings, relativ zu der Unterstützungs-Daten-Referenz-Zelle, von Positionierungs-Referenzsignalen, PRSs, der Vielzahl von Nachbarzellen zu beschreiben, und wobei
die Versatzinformation die jeweiligen LTE-Rahmenversätze zwischen der Unterstützungs-Daten-Referenz-Zelle und jeder der Nachbarzellen beschreibt.

2. Vorrichtung nach Anspruch 1, wobei eine Dienstzelle des UE die Unterstützungs-Daten-Referenz-Zelle oder eine der Vielzahl von Nachbarzellen ist.

3. Vorrichtung nach Anspruch 2, wobei die Verarbeitungsschaltung ferner eingerichtet ist zum Bestimmen eines Zeitfensters relativ zu einem Dienstzellen-Timing zum Messen eines PRS-Empfangs-Timings einer Unterstützungs-Daten-Zelle außer der Dienstzelle basierend auf den Zelldaten und der Versatzinformation.

4. Vorrichtung nach Anspruch 3, wobei:
die Dienstzelle verschieden ist von der Unterstützungs-Daten-Referenz-Zelle; und die Nachbarzelle eine aktivierte PRS-Stummschaltung aufweist.

5. Vorrichtung nach Anspruch 1, wobei:
wenn das UE eine oder mehrere Dienstzellen aufweist und keine der Dienstzellen konfiguriert ist, um Positionierungs-Referenzsignale zu übertragen, die Verarbeitungsschaltung ferner eingerichtet ist zum Bestimmen eines Zeitfensters zum Messen eines PRS-Empfangs-Timings einer Unterstützungs-Daten-Zelle, die nicht eine der Dienstzellen ist, basierend auf der Nachbarinformation und der Versatzinformation.

6. Vorrichtung nach Anspruch 2, wobei, wenn die Dienstzelle zu einer ersten Trägerfrequenz gehört und die Referenz-Zelle und mindestens eine der anderen Unterstützungs-Daten-Zellen zu einer zweiten Trägerfrequenz gehören, die von der ersten Trägerfrequenz verschieden ist, die Verarbeitungsschaltung ferner eingerichtet ist zum Durchführen von Interfrequenz-RSTD-Messungen auf der zweiten Trägerfrequenz basierend auf den Zelldaten und der Versatzinformation.

7. Vorrichtung nach einem der vorhergehenden Ansprüche, wobei die Verarbeitungsschaltung ferner eingerichtet ist zum:
Durchführen von RSTD-Messungen unter Verwenden empfangener PRSs von mindestens einigen der Unterstützungs-Daten-Zellen; und
Erzeugen eines Berichts basierend auf den RSTD-Messungen, wobei der Bericht die RSTD-Messungen relativ zu einer RSTD-Referenz-Zelle anzeigt, wobei
die RSTD-Referenz-Zelle von einer Dienstzelle des UE verschieden ist.

8. Benutzergerät (110, 1100) umfassend:
die Vorrichtung nach einem vorhergehenden Anspruch; und
ferner umfassend einen oder mehrere von: einem Bildschirm (1140), einem Lautsprecher (1130), einem Touchscreen, einer Tastatur (1170), einer Antennenanordnung, die eine Vielzahl von Antennen (1100) beinhaltet, einem Grafikprozessor (1160), einem Anwendungsprozessor (1150).

9. Standortserver (120) zur Verwendung in einem Kommunikationssystem, wobei die Vorrichtung eingerichtet ist zum Bereitstellen von Positionierungs-Unterstützungs-Daten (125) an ein Benutzergerät (110), UE, die Vorrichtung umfassend Verarbeitungsschaltung, die eingerichtet ist zum:
Bestimmen von Information, die eine Unterstützungs-Daten-Referenz-Zelle beschreibt;
Bestimmen von Zelldaten, wobei die Zelldaten relative Übertragungs-Timings von Positionierungs-Referenzsignalen zwischen einer Vielzahl von Nachbarzellen (130a-c) beschreiben;
Bestimmen von Versatzinformation, die jeweilige LTE-Rahmen-Zeitversätze zwischen der Unterstützungs-Daten-Referenz-Zelle und jeder der Nachbarzellen beschreibt; und
Senden (740) an das UE von Daten beinhaltend die Information, die die Unterstützungs-Daten-Referenz-Zelle, die Zelldaten und die Versatzinformation beschreibt;
wobei die Unterstützungs-Daten zumindest die Information beinhalten, die die Unterstützungs-Daten-Referenz-Zelle und die Zelldaten beschreibt.

10. Standortserver nach Anspruch 9, wobei die Unterstützungs-Daten-Referenz-Zelle keine Dienstzelle des UE ist.

11. Standortserver nach Anspruch 9, wobei:
die Vielzahl von Nachbarzellen und die Unterstützungs-Daten-Referenz-Zelle Unterstützungs-Daten-Zellen sind;
eine Dienstzelle des UE eine der Unterstützungs-Daten-Zellen ist, und die Dienstzelle des UE zu einer ersten Trägerfrequenz gehört;
mindestens eine der Unterstützungs-Daten-Zellen außer der Dienstzelle zu einer zweiten Trägerfrequenz gehört.

12. Verfahren (600), durchgeführt durch ein Benutzergerät, UE, (110), das Verfahren umfassend:
Empfangen (610) von Observed Time of Difference Of Arrival, OTDOA, - Unterstützungs-Daten, wobei die OTDOA-Unterstützungs-Daten Daten beinhalten, die Timings von Positionierungs-Referenzsignalen, PRS, für eine Vielzahl von Nachbarzellen anzeigen, wobei die Timings relativ zu einem Timing einer Unterstützungs-Daten-Referenz-Zelle angezeigt werden, wobei
Empfangen von OTDOA-Unterstützungs-Daten Empfangen (640) von Versatzinformation beinhaltet, wobei die Versatzinformation anzeigend für jeweilige LTE-Rahmenversätze zwischen der Unterstützungs-Daten-Referenz-Zelle und der Vielzahl von Nachbarzellen ist.

13. Verfahren (700), durchgeführt durch einen Standortserver (120), das Verfahren umfassend:
Empfangen (720), von einem Benutzergerät, UE, (110), einer Anfrage nach Observed Time of Difference Of Arrival, OTDOA, -Unterstützungs-Daten;
Erzeugen (730) der OTDOA-Unterstützungs-Daten (125); und
Senden (740) der erzeugten OTDOA-Unterstützungs-Daten an das UE, wobei
die OTDOA-Unterstützungs-Daten eine Versatzinformation beinhalten, die LTE-Rahmenversätze zwischen der Unterstützungs-Daten-Referenz-Zelle und der Vielzahl von Nachbarzellen beschreibt.

14. Computerprogramm, das, wenn es von einem Computer ausgeführt wird, das Computersystem veranlasst, das Verfahren nach einem der Ansprüche 9 bis 13 durchzuführen oder als die Vorrichtung nach einem der Ansprüche 1 bis 8 zu fungieren.

15. Nichtflüchtiges maschinenlesbares Speichermedium, das darauf Anweisungen gespeichert hat, die, wenn sie von einem Computer ausgeführt werden, den Computer veranlassen, das Verfahren nach einem der Ansprüche 9 bis 13 durchzuführen oder als die Vorrichtung nach einem der Ansprüche 1 bis 8 betrieben zu werden.

## Revendications

1. Un dispositif destiné à une utilisation dans un équipement utilisateur, UE, (110) de communication mobile, le dispositif comprenant une circuiterie de traitement agencée pour :
recevoir (630) des données de cellule se rapportant à une pluralité de cellules de données d'assistance, et
recevoir (640) une information de décalage, dans lequel la pluralité de cellules de données d'assistance inclut une cellule de référence de données d'assistance et une pluralité de cellules voisines (130a-c),
les données de cellule incluent :
(i) une information pour décrire des séquencements de signaux de référence de positionnement, PRS, de la cellule de référence de données d'assistance, et
(ii) une information de voisinage, l'information de voisinage étant destinée à décrire des séquencements, relatifs à la cellule de référence de données d'assistance, de signaux de référence de positionnement, PRS, de la pluralité de cellules voisines, et dans lequel
l'information de décalage décrit des décalages de trame LTE, respectifs entre la cellule de référence de données d'assistance et chacune des cellules voisines.

2. Le dispositif selon la revendication 1, dans lequel une cellule de desserte de l'UE est la cellule de référence de données d'assistance ou l'une de la pluralité de cellules voisines.

3. Le dispositif selon la revendication 2, dans lequel la circuiterie de traitement est en outre agencée pour déterminer une fenêtre temporelle relative à un séquencement de cellule de desserte pour la mesure d'un séquencement de réception de PRS d'une cellule de données d'assistance autre que la cellule de desserte sur la base des données de cellule et de l'information de décalage.

4. Le dispositif selon la revendication 3, dans lequel :
la cellule de desserte est différente de la cellule de référence de données d'assistance ; et
la cellule voisine a un blocage de PRS qui est activé.

5. Le dispositif selon la revendication 1, dans lequel : lorsque l'UE a une ou plusieurs cellules de desserte, et qu'aucune des cellules de desserte n'est configurée pour émettre des signaux de référence de positionnement, la circuiterie de traitement est en outre agencée pour déterminer une fenêtre temporelle pour la mesure d'un séquencement de réception de PRS d'une cellule de données d'assistance qui n'est pas l'une des cellules de desserte sur la base de l'information de voisinage et de l'information de décalage.

6. Le dispositif selon la revendication 2, dans lequel, lorsque la cellule de desserte dépend d'une première fréquence de porteuse et que la cellule de référence et au moins l'une des autres cellules de données d'assistance dépendent d'une seconde fréquence de porteuse différente de la première fréquence de porteuse, la circuiterie de traitement est en outre agencée pour réaliser des mesures de RSTD entre fréquences sur la seconde fréquence de porteuse sur la base des données de cellule et de l'information de décalage.

7. Le dispositif selon l'une des revendications précédentes, dans lequel la circuiterie de traitement est en outre agencée pour :
réaliser des mesures de RSTD à l'aide de PRS reçus d'au moins certaines des cellules de données d'assistance ; et
générer un rapport sur la base des mesures de RSTD, le rapport indiquant les mesures de RSTD relatives à une cellule de référence de RSTD, dans lequel la cellule de référence de RSTD est différente d'une cellule de desserte de l'UE.

8. Un équipement utilisateur (110, 1100) comprenant :
le dispositif selon l'une des revendications précédentes ; et
comprenant en outre l'un ou plusieurs parmi : un écran (1140), un haut-parleur (1130), un écran tactile, un clavier (1170), un réseau d'antennes incluant une pluralité d'antennes (1100), un processeur graphique (1160), un processeur applicatif (1150).

9. Un serveur de localisation (120) pour une utilisation dans un système de communication, le dispositif étant agencé pour délivrer des données d'assistance au positionnement (125) à un équipement utilisateur (110), UE, le dispositif comprenant une circuiterie de traitement agencée pour :
déterminer une information décrivant une cellule de référence de données d'assistance ;
déterminer des données de cellule, les données de cellule étant destinées à décrire des séquencements d'émission relatifs de signaux de référence de positionnement entre une pluralité de cellules voisines (130a-c) ;
déterminer une information de décalage décrivant des décalages temporels de trame de LTE respectifs entre la cellule de référence de données d'assistance et chacune des cellules voisines ; et
envoyer (740), à l'UE, des données incluant l'information décrivant la cellule de référence de données d'assistance, les données de cellule, et l'information de décalage ;
dans lequel les données d'assistance incluent au moins l'information décrivant la cellule de référence de données d'assistance et les données de cellule.

10. Le serveur de localisation selon la revendication 9, dans lequel la cellule de référence de données d'assistance n'est pas une cellule de desserte de l'UE.

11. Le serveur de localisation selon la revendication 9, dans lequel :
la pluralité de cellules voisines et la cellule de référence de données d'assistance sont des cellules de données d'assistance ;
une cellule de desserte de l'UE est l'une des cellules de données d'assistance, et la cellule de desserte de l'UE dépend d'une première fréquence de porteuse ;
au moins l'une des cellules de données d'assistance autre que la cellule de desserte dépend d'une seconde fréquence de porteuse.

12. Un procédé (600) mis en œuvre par un équipement utilisateur, UE, (110) le procédé comprenant :
la réception (610) de données d'assistance de temps observé de différence d'arrivée, OTDOA, les données d'assistance d'OTDOA incluant des données indicatives de séquencements de signaux de référence de positionnement, PRS, pour une pluralité de cellules voisines, les séquencements étant indiqués par rapport à un séquencement d'une cellule de référence de données d'assistance, dans lequel la réception de données d'assistance d'OTDOA inclut la réception (640) d'une information de décalage, l'information de décalage étant indicative de décalages de trame LTE respectifs entre la cellule de référence de données d'assistance et la pluralité de cellules voisines.

13. Un procédé (700) mis en œuvre par un serveur de localisation (120), le procédé comprenant :
la réception (720), à partir d'un équipement utilisateur, UE, (110) d'une requête pour des données d'assistance de temps observé de différence d'arrivée, OTDOA ;
la génération (730) des données d'assistance d'OTDOA (125) ; et
l'envoi (740) à l'UE des données d'assistance d'OTDOA générées, dans lequel
les données d'assistance d'OTDOA incluent une information de décalage décrivant des décalages de trame de LTE respectifs entre la cellule de référence de données d'assistance et la pluralité de cellules voisines.

14. Un programme de calculateur qui, lors de son exécution par un calculateur, amène le système de calculateur à réaliser le procédé selon l'une des revendications 9 à 13 ou à faire fonction du dispositif selon l'une des revendications 1 à 8.

15. Un support de stockage lisible par machine à stockage non transitoire ayant des instructions stockées dessus qui, lors de leur exécution par un calculateur, amènent le calculateur à réaliser le procédé selon l'une des revendications 9 à 13, ou à fonctionner comme l'appareil selon l'une des revendications 1 à 8.
